# EUROPEAN PATENT SPECIFICATION

(11) **EP 2 453 763 B1**
(45) Date of publication and mention of the grant of the patent: **06.09.2017**
(21) Application number: 10800333.6
(22) Date of filing: 07.07.2010
(51) Int. Cl.: A23L 5/10, A23L 13/00, A23L 13/50, A23L 17/00, A23P 20/12, A23P 20/10

(54) **OIL-BASED COATING FOR BAKED FOOD PRODUCTS**
BESCHICHTUNG AUF ÖLBASIS FÜR BACKWAREN
ENROBAGE À BASE D'HUILE POUR PRODUITS ALIMENTAIRES CUITS

(30) Priority: 16.07.2009 US 226089 P
(43) Date of publication of application: 23.05.2012
(73) Proprietor: Kerry Group Services International, Ltd., County Kerry (IE)
(72) Inventor: WRIGHT, William, E., Beloit Wisconsin 53511 (US)
(74) Representative: FRKelly
(86) International application number: PCT/US2010/041206
(87) International publication number: WO 2011/008602

(56) References cited:
- WO-A1-92/07477
- FR-A1- 2 578 719
- GB-A- 2 407 958
- US-A- 3 406 081
- US-A- 3 586 512
- US-A- 4 518 620
- US-A- 5 266 339
- US-A1- 2009 162 500
- anonymous: "Antioxidant", Wikipedia, the free encyclopedia , 23 April 2009 (2009-04-23), XP002686913, Retrieved from the Internet: URL:http://en.wikipedia.org/wiki/Antioxida nt [retrieved on 2012-11-09]

## Description

### CROSS-REFERENCE TO RELATED APPLICATIONS

This patent application claims the benefit of U.S. Provisional Patent Application No. 61/226,089, filed July 16, 2009.

### BACKGROUND OF THE INVENTION

Food products that have been deep fried in oil or fat continue to be a popular component of the American diet. Deep fried foods are commonly found in restaurants and they are available frozen in grocery stores. Many foods that are deep fried in oil or fat are given a coating of batter or breading prior to frying. These coatings absorb some of the fat or oil in which the food is cooked in order to allow the outside of the food to become crispy and browned. Concern relating to the health effects of consuming deep fried foods has risen in recent years. Some fats and oils used to prepare deep fried foods contain trans fats, which can increase the risk of heart disease. In addition, foods which have been deep fried tend to be higher in calories than their broiled or baked counterparts. Given the current obesity epidemic, consumers are searching for lower calorie, healthy alternatives to their favorite deep fried foods. There is need in the art for food products having a taste and texture similar to that of foods which have been deep fried in fat or oil, but which lower the health risks associated with traditional deep fried food products.

For example WO9207477 discloses a browning composition for uncooked foods comprising a colorant and a fat or an oil.

### BRIEF SUMMARY OF THE INVENTION

The invention provides a coating composition as defined in the claims comprising oil, a flavor, a color, an emulsifier, and an antioxidant. The coating composition is capable of simulating the taste and texture of foods that have been deep fried without deep frying the food. Foods that have been coated with the composition are typically healthier (e.g., lower in calories and trans fats) than foods that have been deep fried. Thus, the coating composition makes it possible for consumers to enjoy the taste and texture associated with traditionally deep fried foods, in foods that have not been deep fried, and without the disadvantages assocaited with deep fried foods.

The invention also provides a method for preparing a baked food product that simulates a food product that has been deep fried as defined in the claims and comprising (i) emulsifying the coating composition in water, (ii) contacting said food product with the coating composition, and (iii) baking the food product.

### DETAILED DESCRIPTION OF THE INVENTION

In accordance with the invention, a coating composition comprising an oil is provided. The coating composition comprises any suitable oil. Preferably, the oil is soybean oil, corn oil, cottonseed oil, sunflower oil, canola oil, safflower oil, olive oil, peanut oil, or combinations thereof. Without wishing to be bound by any particular theory, it is believed that the use of oils having high levels of saturated fats have a longer shelf life than oils with lower levels of saturated fats. However, oils having higher levels of saturated fats are more susceptible to solidification at higher temperatures due to their relatively low melting points, which can be problematic especially during the winter months. Thus, it is preferable to blend oils with lower melting points and higher levels of saturated fats (e.g., palm oil, coconut oil) with oils having higher melting points and lower levels of saturated fats (e.g., soy oil) for use in the composition. Preferably, the oil or blend of oils has a melting point that is at least about 5° C, in order to avoid solidification during winter storage and transport. Alternatively, the composition comprising the oil can be heated prior to use to eliminate any solidification which may have occurred during storage.

The composition comprises any suitable amount of oil. The composition comprises at least about 85% (by weight) oil (e.g., at least about 90%, at least about 95%, or at least about 98% oil). Alternatively, or in addition, the composition comprises about 98% (by weight) or less oil (e.g., about 95% or less oil). For example, the composition comprises about 85% oil to about 98% oil (e.g., about 90% to about 98% oil, about 95% to about 98% oil, or about 85% to about 90% oil).

The composition further comprises a flavor. The flavor is any suitable flavor. Preferably, the flavor is lemon, butter, buttermilk, cheese, dill, deep fat fried flavors, vegetable oil, partially hydrogenated vegetable oil, natural flavors, artificial flavors, oleoresins, essential oils, hydrolyzed soy protein, hydrolyzed corn protein, hydrolyzed wheat protein, hydrolyzed vegetable protein, or combinations thereof. The composition comprises any suitable amount of flavor. The composition comprises at least about 0.01% (by weight) flavor (e.g., at least about 0.05%, at least about 0.1%, at least about 0.5%, at least about 1%, or at least about 5% flavor). Alternatively, or in addition, the composition comprises about 10% (by weight) or less flavor (e.g., about 8% or less, about 5% or less, about 3% or less, about 1% or less, or about 0.5% or less flavor). For example, the composition comprises about 0.01% flavor to about 10% flavor (e.g., about 0.05% to about 5% flavor, about 0.1% to about 5% flavor, or about 0.5% to about 5% flavor).

The composition further comprises a color. The color is any suitable color. Preferably, the color is lakes, beta carotene, paprika, turmeric, caramel, annatto, or combinations thereof. Most preferably, the color or combination thereof results in a color similar to that of fried foods when the composition is applied to a food product. The composition comprises any suitable amount of color. The composition comprises at least about 0.01% (by weight) color (e.g., at least about 0.05%, at least about 0.1%, at least about 0.5%, at least about 1%, or at least about 5% color). Alternatively, or in addition, the composition comprises about 20% (by weight) or less color (e.g., about 15% or less, about 10% or less, about 8% or less, about 5% or less, or about 3% or less color). For example, the composition comprises about 0.01% color to about 20% color (e.g., about 0.05% to about 15% color, about 0.1% to about 10% color, or about 0.5% to about 5% color).

The composition further comprises an emulsifier. The emulsifier is any suitable emulsifier. Without wishing to be bound by any particular theory, it is believed that the balance of hydrophilic and lipophilic components of the emulsifier or combinations thereof affects the ability of the emulsifier to stabilize the composition. Preferably, the emulsifier is polysorbate 60, monoglycerides, diglycerides, polyglycerol esters of fatty acids, propylene glycol monoesters of fatty acids, lactylated monoglycerides, acetylated monoglycerides, polysorbate 80, or combinations thereof. The composition comprises any suitable amount of emulsifier. The composition comprises at least about 0.01% (by weight) emulsifier (e.g., at least about 0.05%, at least about 0.1%, at least about 0.5%, at least about 1%, or at least about 5% emulsifier). Alternatively, or in addition, the composition comprises about 15% (by weight) or less emulsifier (e.g., about 10% or less, about 8% or less, about 5% or less, about 3% or less, or about 1% or less emulsifier). For example, the composition comprises about 0.01% emulsifier to about 15% emulsifier (e.g., about 0.05% to about 10% emulsifier, about 0.1% to about 8% emulsifier, or about 0.5% to about 5% emulsifier).

The composition further comprises an antioxidant. Without wishing to be bound by any particular theory, it is believed that antioxidants improve the shelf life of the composition. The antioxidant is any suitable antioxidant. Preferably, the antioxidant is TBHQ (tertiary butylhydroquinone), tocopherols, carotenoids, natural extracts, BHA (butylated hydroxyanisole), BHT (butylated hydroxytoluene), or combinations thereof. The composition comprises any suitable amount of antioxidant. The composition comprises at least about 0.001 % (by weight) antioxidant (e.g., at least about 0.01 %, at least about 0.05%, at least about 0.1%, at least about 0.5%, or at least about 1% antioxidant). Alternatively, or in addition, the composition comprises about 5% (by weight) or less antioxidant (e.g., about 1% or less, about 0.5% or less, or about 0.1% or less antioxidant). For example, the composition comprises about 0.001% antioxidant to about 5% antioxidant (e.g., about 0.01% to about 1% antioxidant, about 0.05% to about 1% antioxidant, or about 0.1 % to about 1% antioxidant).

The coating composition can be emulsified in water before use with a food product. Without wishing to be bound by any particular theory, it is believed that there is an optimum water content of the coating composition before use with a food product which results in improved texture of the finished food product. Emulsion in higher levels of water can, however, result in a less desirable flavor, texture, and/or color of the finished food product. The amount of water in which the coating composition is emulsified can vary depending on the food product it is used with, processing method, and/or reconstitution method in order to optimize the quality of the finished food product. Preferably, the coating composition is emulsified in a ratio of about 30% (by weight) coating to about 70% (by weight) water (e.g., a ratio of about 40% (by weight) coating to about 60% (by weight) water, a ratio of about 50% (by weight) coating to about 50% (by weight) water, a ratio of about 60% (by weight) coating to about 40% (by weight) water, or a ratio of about 70% (by weight) coating to about 30% (by weight) water). For example, the coating composition can be emulsified in about 10% (by weight) water to about 80% (by weight) water (e.g., about 20% (by weight) water to about 60% (by weight) water, about 30% (by weight) water to about 50% (by weight) water, or about 35% (by weight) water to about 45% (by weight) water.

While not wishing to be bound by any particular theory, emulsion stability is likely dependent upon the relative proportions of water and fat present in the system and the hydrophilic-lipophilic balance (HLB) of the emulsifiers themselves. HLB is a measure of the degree to which emulsifiers are hydrophilic or lipophilic. Preferred HLB values depend on the amounts of oil and water present in the coating composition. Preferably, the coating composition contains emulsifiers having a total HLB of about 1 to about 10 (e.g., about 2 to about 9, about 3 to about 8, about 4 to about 7, or about 4 to about 6).

If the coating composition is emulsified in water prior to use with a food product, the oil comprising the coating typically comprises droplets which are suspended in the water. The oil droplets have any suitable size. Without wishing to be bound by any particular theory, it is believed that smaller oil droplet sizes increase the stability of the emulsion. Attaining a certain oil droplet size is dependant, at least in part, on the emulsifiers used and the emulsification process (e.g., equipment used, shear rate, mixing time) used to prepare the emulsion. It is thought that the emulsifiers facilitate emulsion stability by preventing coalescence of the oil droplets suspended in the water. The oil droplets typically have an average size of at least about 0.01 microns (e.g., at least about 0.05, at least about 0.1, at least about 0.5, at least about 1, or at least about 5 microns). Alternatively, or in addition, the oil droplets have an average size of about 50 microns or less (e.g., about 40 or less, about 30 or less, about 25 or less, about 20 or less, or about 15 or less microns). For example, the oil droplets have an average size of about 0.01 microns to about 40 microns (e.g., about 0.05 to about 30 microns, about 0.1 to about 25 microns, or about 0.5 to about 25 microns).

The coating composition has any suitable viscosity. The composition typically has a viscosity of at least about 10 centipoise (10 mPa·s) (e.g., at least about 20, at least about 30, at least about 40, at least about 50, or at least about 60 centipoise (mPa·s)). Alternatively, or in addition, the composition has a viscosity of about 400 centipoise or less (400 mPa·s or less) (e.g., about 350 or less, about 300 or less, about 250 or less, about 200 or less, or about 150 or less centipoise (mPa·s)). For example, the composition has a viscosity of about 30 centipoise (30 mPa·s) to about 400 centipoise (400 mPa·s) (e.g., about 30 to about 300 centipoise (mPa·s) about 30 to about 200 centipoise (mPa.s), about 30 to about 150 centipoise (mPa.s), or about 50 to about 100 centipoise (mPa.s)). The viscosity of the composition was measured using a Brookfield LVF viscometer, spindle size 1 and 2, at 12 rpm, with a sample temperature of about 15 - 21 °C.

Preferably, the coating composition is substantially free of hydrophilic colloids. Hydrophilic colloids include starches, natural gums, and chemically-modified natural polysaccharides. Hydrophilic colloids are generally not soluble in oil and if added to the coating composition, would settle out of the composition, making them unsuitable for use in the composition.

The invention also provides a method for preparing a baked food product that simulates a food product that has been deep fried comprising (i) emulsifying the coating composition in water, (ii) contacting said food product with the coating composition, and (iii) baking the food product.

The coating composition can be prepared in any suitable manner. For example, a portion of the oil can be added to a vessel, a mixer is inserted and activated, then the emulsifier is added, followed by the color, flavor, antioxidant, and remaining oil. Preferably, the composition is heated upon the addition of the emulsifier in order to facilitate dispersion of the emulsifier in the oil. This can be accomplished using any suitable method, such as indirect steam injection using steam jacked mixing tank. Without wishing to be bound by any particular theory, it is believed that indirect heating methods are preferable to direct heating methods (e.g., direct steam injection) since they are less likely to result in any reaction with the components of the coating composition.

The coating composition can be emulsified in water in any suitable manner. For example, water is added to a vessel, a mixer is inserted and activated, then the composition is added. Alternatively, both the water and coating composition are added to the vessel, then mixed. Preferably, the water is added first, followed by the composition. Any suitable mixing device can be used, such as a Waring blender, a bowl chopper (e.g., Stephan Vertical Cutter Mixer Model No. UMM/SK 24 E), or a rotosolver (e.g., ADMIX Rotosolver). Without wishing to be bound by any particular theory, it is believed that sufficient shear is necessary in order to generate oil droplets that are sufficiently small enough to produce an emulsion that is sufficiently stable for use with a food product.

The coating composition can be applied to the food product in any suitable manner. For example, the food product can be dipped into the coating composition. More preferably, the coating composition is sprayed onto the food product. Any suitable device can be used, such as a spinning disc type applicator (e.g., Fedco Cyclone Liquid Coater). Without wishing to be bound by any particular theory, it is believed that spraying the coating composition onto the food product reduces the amount of coating which adheres to the food product when compared with other methods, thus reducing fat and calorie levels. It is also believed that food products which have been sprayed with the coating composition are more crispy, and less mushy and chewy, and are thus more similar to fried foods.

The food product can be any suitable food product. For example, the food product can be cheese, poultry, beef, pork, fish, seafood, vegetables, fruit, meat analogs, or combinations thereof. The food product can be raw, cooked, partially cooked, and/or frozen prior to the application of the coating composition. The food product can be coated in batter, breading, or combination of such prior to being contacted by the coating composition. The food product and/or batter or breading can contain additional components, such as colors, flavors, or other additives. Preferably, the food product is coated in bread crumbs, which impart desirable color and texture to the food product when baked which emulate fried products. Any suitable bread crumb formulation can be used. For example, crackermeal bread crumbs, American bread crumbs, Japanese bread crumbs, and/or extruded bread crumbs can be used, which are commercially available. Choice of bread crumb depends, in part, on the desired appearance and texture of food product.

After contact with the coating composition, the food product can be baked in any suitable manner. For example, conventional ovens, including convection ovens, can be used to bake the food product. The baking time and temperature vary depending on the nature of the food product. Prior to baking, but after contact with the coating composition, the food product can be frozen. The food product can also be frozen after baking.

The following examples further illustrate the invention but, of course, should not be construed as in any way limiting its scope.

### EXAMPLE 1

This example illustrates the preparation of a preferred formulation of the inventive coating composition.

The composition was prepared in a steam jacketed mixing tank fitted with two different agitators, a "sweep" type agitator which directs liquids toward the center of the tank and a "liquefier" type agitator, which moves liquids up and down. Both agitators were moving throughout the entire manufacturing process. Enough oil was added to the tank to cover the liquefier agitator (about 25% of the oil). The sweep and liquefier agitators were set to speeds of 20. The emulsifiers were added and the mixture was heated to a temperature of 65.5°C to facilitate proper dispersion of emulsifiers. Heating was indirect in order to prevent introduction of water into the composition and possible growth of microbial spoilage and pathogenic bacteria during subsequent storage and distribution of the composition. Once the emulsifiers were properly dispersed, the steam was turned off and the temperature of the mix was allowed to drop under ambient conditions. While cooling was taking place, the colors, flavor and antioxidant were added followed by the remaining oil. The composition was mixed for an additional 10 minutes. After mixing was completed, the composition was pumped into containers for storage.

The percentages by weight of each component in the coating composition are shown below in Table 1.

**TABLE 1**

| **Ingredient** | **Function** | **% By Weight** |
|---|---|---|
| Soybean Salad Oil | Oil | 96.9629 |
| Mono & Diglycerides | Emulsifier | 1.5 |
| Polysorbate 60 | Emulsifier | 0.5 |
| Deep Fat Fried Flavor | Flavor | 0.8 |
| Oleoresin Turmeric | Color | 0.08 |
| Paprika Oleoresin | Color | 0.06 |
| TBHQ | Antioxidant | 0.0971 |

### EXAMPLE 2

This example illustrates the effect of antioxidants on the shelf life of the coating composition.

The composition was prepared as described above in Example 1 except the antioxidant was excluded. The composition was then divided into four 136 kg batches, each of which was placed in a swept surface kettle with a counter-rotating agitator. The agitators were run at low speed and 0.1 wt.% TBHQ, 0.05 wt.% rosemary extract, 0.12 wt.% rosemary extract, or 0.2 wt.% rosemary extract was added. The compositions were then mixed for ten minutes at ambient temperature (approximately 21.11°C). The compositions were transferred to clean buckets with lids and stored at ambient temperature in a warehouse. Each composition was evaluated for its effects on sensory attributes and analyzed for 2-thiobarbituric acid (TBA) and peroxide values on the day of preparation, 1 month later, 2 months later, and 4 months later. The results are set forth in Table 2.

**TABLE 2**

| **Composition** | **Antioxidant** | **% By Weight** | **Peroxide Value** | **TBA Value** | **Result** |
|---|---|---|---|---|---|
| 2A | Rosemary extract | 0.05 | 0 months: 3 | 0 months: <0.035 | Peroxide values increased within in 3 months. TBA values were unchanged. Rancidity not yet detectable by taste. |
| | | | 1 month: 2.36 | 1 month: 0.076 | |
| | | | 2 months: 2.07 | 2 months: 0.036 | |
| | | | 4 months: 3.07 | 4 months: 0.075 | |
| 2B | Rosemary extract | 0.12 | 0 months: 3 | 0 months: <0.035 | Peroxide values increased within in 3 months. TBA |
| | | | 1 month: 2.26 | 1 month: 0.049 | values were unchanged. Rancidity not yet detectable by taste. |
| | | | 2 months: 2.24 | 2 months: 0.13 | |
| | | | 4 months: 3.24 | 4 months: 0.093 | |
| 2C | Rosemary extract | 0.2 | 0 months: 3 | 0 months: <0.035 | Peroxide values increased within in 3 months. TBA values increased, then decreased. Rancidity not yet detectable by taste. |
| | | | 1 month: 2.14 | 1 month: 0.044 | |
| | | | 2 months: 2.02 | 2 months: 0.065 | |
| | | | 4 months: 3.53 | 4 months: 0.13 | |
| 2D | TBHQ | 0.1 | 0 months: 3 | 0 months: <0.035 | Smallest change in peroxide values. TBA values appear to be increasing. Rancidity not yet detectable by taste. |
| | | | 1 month: 1.99 | 1 month: 0.055 | |
| | | | 2 months: 2.01 | 2 months: 0.035 | |
| | | | 4 months: 2.88 | 4 months: 0.11 | |

As is apparent from the results set forth above in Table 2, both types of antioxidant improved the shelf life of the composition by effectively reducing rancidity.

### EXAMPLE 3

This example illustrates the effects of using various oils in the coating composition.

Six different oils, indicated below in Table 3, were placed in beakers. The colors, flavor, emulsifiers and antioxidant identified in Example 1 were then added to each of the six compositions in the amounts indicated in Example 1, while manually stirring for about 1 minute. The mixture was transferred to a Waring blender, which was run at low speed while the composition was diluted to a ratio of 60% composition to 40 wt.% water. Speed was increased to high for 90 seconds. The emulsion was then transferred to a beaker and visually observed for emulsion stability over a period of 2 hours. The results are set forth in Table 3.

**TABLE 3**

| **Composition** | **Fat** | **Result** |
|---|---|---|
| 3A | 100% Soybean Oil | No solidification. Emulsion stable for at least 2 hrs (no separation). |
| 3B | 100% Modified Palm Oil | Composition solidifies under refrigeration Emulsion so unstable it separates in minutes. |
| 3C | 50% Modified Palm 50% Soybean Oil | Solidified. |
| 3D | 14.3% Modified Palm 85.7% Soybean Oil | No solidification. Stable emulsion. |
| 3E | 100% Corn Oil | No solidification. Emulsion stable for at least 2 hrs (no separation). |
| 3F | 100% Canola Oil | No solidification. Emulsion stable for at least 2 hrs (no separation). |

As is apparent from the results set forth above in Table 3, Compositions 3A and 3D-3F formed stable emulsions and did not solidify and formed emulsions that were sufficiently stable such that a food processor could apply them onto food products. Compositions 3B and 3C solidified and/or were unstable, and were thus unusable as coating compositions. Inherent design features of commercially available food processing equipment that is used to apply the coating composition onto food products require the coating composition to be a flowable liquid at room temperature. In addition, solidified fat compositions do not provide consistent, uniform coverage of food products. The coating composition must also remain stable long enough to allow for application onto a food product. If separation of the oil and water phases begins before or while the coating composition is being used, some food product will be coated with water while other product will be coated with the composition, resulting in inconsistent taste and texture. While not wishing to be bound by any particular theory, it is thought that the increased level of saturated fats present in Compositions 3B and 3C resulted, at least in part, in solidification of the coating composition.

### EXAMPLE 4

This example illustrates the effects of using various oil and emulsifier combinations in the coating composition.

Nine different oils were placed in beakers, followed by an emulsifier(s) in the amounts indicated below in Table 4. 0.06 wt.% paprika extract, 0.8 wt.% deep fat fried flavor, and 0.097 wt.% TBHQ, while manually stirring for about 1 minute. The mixture was transferred to a Waring blender, which was run at low speed while the composition was diluted to a ratio of 60% composition to 40 wt.% water. Speed was then increased to high for 90 seconds. The emulsion was then transferred to a beaker and visually observed for emulsion stability over a period of 2 hours. The results are set forth in Table 4. The HLB of each composition was estimated and is set forth in Table 4.

**TABLE 4**

| **Composition** | **Oil** | **Emulsifier** | **HLB** | **Stability** | **Result** |
|---|---|---|---|---|---|
| 4A | 98.543 wt.% canola | 0.5 wt.% Mono & Diglycerides and Polysorbate 60 | 6 | Emulsion unstable | Emulsion unusable |
| 4B | 97.843 wt.% canola | 1.2 wt.% Mono & Diglycerides and Polysorbate 60 | 6 | Emulsion unstable | Emulsion unusable |
| 4C | 97.043 wt.% soybean | 2 wt.% Mono & Diglycerides and Polysorbate 60 | 6 | Emulsion stable | Preferred formula |
| 4D | 98.743 wt.% soybean | 0.3 wt.% Distilled monoglycerides and Sodium Stearyol Lactylate | 18-21 | Oil and water phases separate very quickly. Oil phase solidifies. | Emulsion unusable |
| 4E | 97.543 wt.% soybean | 0.5 wt.% Distilled monoglycerides and Sodium Stearyol Lactylate | 18-21 | Oil and water phases separate very quickly. Oil phase solidifies. | Emulsion unusable |
| 4F | 97.043 wt.% soybean | 2 wt.% Mono and Diglycerides with Polyglycerol Ester of Fatty Acids | 4-5 | Emulsion stable | Preferred formula |
| 4G | 98.043 wt.% soybean | 1 wt.% Lecithin | 3-4 | Emulsion unstable | Emulsion unusable |
| 4H | 97.043 wt.% soybean | 3 wt.% Lecithin | 3-4 | Emulsion unstable | Emulsion unusable |
| 4I | 97.043 wt.% modified palm oil | 2 wt.% Mono & Diglycerides and Polysorbate 60 | 2.8-3.8 | Emulsion unstable | Emulsion unusable |

As is apparent from the results set forth above in Table 4, Compositions 4C and 4F formed stable, usable emulsions, whereas all other emulsions were unsuitable for use due to instability. The HLB of Compositions 4C and 4F ranged from about 4 to about 6. Without wishing to be bound by any particular theory, it is believed that the ability of the coating composition to form a stable emulsion is dependent on the relative amounts of water and fat present in the system and the HLB of the emulsifiers themselves.

### EXAMPLE 5

Example 5 illustrates the effect of adding various hydrophilic colloids to the coating composition.

Five different compositions were prepared by adding soybean oil in the amount indicated below in Table 5 to a beaker, followed by paprika extract in the amount indicated below in Table 5, 0.08 wt.% turmeric extract, 0.8 wt.% deep fat fried flavor, and a hydrophilic colloid in the amount indicated below in Table 5, while manually stirring for about 2-3 minutes. The composition was then transferred to a beaker and visually observed for emulsion stability. The results are set forth in Table 5.

**TABLE 5**

| **Composition** | **Soybean Oil** | **Paprika Extract** | **Hydrophilic Colloid** | **Result** |
|---|---|---|---|---|
| 5A | 98.31% | 0.06% | 0.75 wt. % Guar Gum | Separated and began settling to bottom of container within minutes. |
| 5B | 98.31% | 0.06% | 0.75 wt. % Xanthan Gum | Separated and began settling to bottom of container within minutes. |
| 5C | 98.31 | 0.06% | 0.75 wt. % Methylcellulose | Separated and began settling to bottom of container within minutes. |
| 5D | 97.36% | 0.14% | 1.62 wt. % Modified Corn Starch | Separated and began settling to bottom of container within minutes. |
| 5E | 97.36% | 0.14% | 1.62 wt. % Hydrolyzed Wheat Protein | Separated and began settling to bottom of container within minutes. |

As is apparent from the results set forth above in Table 5 none of hydrophilic colloids were able to form a stable emulsion. Without wishing to be bound by any particular theory, it is believed that water soluble/reactive hydrophilic colloids have nothing to bond to, which results in an immediate tendency to settle out. Once settled, there is no practical way to completely re-suspend the hydrophilic colloid.

### EXAMPLE 6

Example 6 illustrates the effect of the ratio of coating composition to water in an emulsion of the coating composition on finished food product quality.

Three compositions were prepared by adding 96.9629 wt.% soybean oil to a beaker, followed by 0.06 wt.% paprika extract, 0.08 wt.% turmeric extract, 0.8 wt.% deep fat fried flavor, 1.5 wt.% mono and diglycerides, and 0.0971 wt.% TBHQ, while manually stirring for about 1 minute. Two of the compositions were then mixed with water in the amount indicated below using a Waring blender, which was run at low speed while the water was added. Speed was then increased to high for 90 seconds. The three compositions, along with a 100 wt.% water control were sprayed onto breaded chicken and the results are set forth in Table 6. The chicken was dusted with Kerry G7102 Predust Breading, battered with Kerry G7091 Batter (diluted 31.25% water:68.75% G7091), and breaded with Kerry G5890 Japanese Bread Crumbs prior to being sprayed with the emulsion. All chicken products were frozen to a constant temperature before being cooked in an oven in preparation for eating.

**TABLE 6**

| **Composition** | **% Composition By Weight** | **% Water By Weight** | **Result** | **Comment** |
|---|---|---|---|---|
| 6A | 0 | 100 | Color completely dependent on underlying breading. Breading texture softest and least crisp, no fried flavor at all. | Poor finished food product quality |
| 6B | 30 | 70 | Lighter color, weaker flavor, slightly less crispy and soft than 40:60 ratio | Acceptable food product quality |
| 6C | 60 | 40 | Brighter color, stronger flavor than 30:70 ratio, best overall (moist but crispy) texture | Most preferred ratio |
| 6D | 100 | 0 | Darkest color, strongest flavor, least moist texture | Acceptable, but food product had a reduced moisture level |

As is apparent from the results set forth above in Table 6, the ratio of water to coating composition affects the texture, color and flavor of the finished food product. As the percent composition increases and the percent water decreases, the eating quality and visual color become more similar to that of a fried food product, resulting in an increase in deep fat fried flavor, color and crispness. However, as the percent water continues to decrease, the moisture levels of the food product also decrease, resulting in a product that is less juicy and therefore has a less appealing mouthfeel.

### EXAMPLE 7

Example 7 illustrates the effect of the type of mixing equipment used in the preparation of an emulsion of the coating composition.

Five compositions were prepared by adding 96.9629 wt.% soybean oil to a vessel, followed by 0.06 wt.% paprika extract, 0.08 wt.% turmeric extract, 0.8 wt.% deep fat fried flavor, 1.5 wt.% mono and diglycerides, 0.5 wt.% polysorbate 60 and 0.0971 wt.% TBHQ, while manually stirring for about 1 minute. Each composition was then mixed as described below in Table 7, while the composition was diluted to a ratio of 60% composition to 40 wt.% water. The size of the oil droplets was measured using a Mastersizer 2000 made by Malvern Instruments Ltd. and is listed below in Table 7.

**TABLE 7**

| **Composition** | **Mixer** | **Mix Time (minutes)** | **Comments** | **Result** |
|---|---|---|---|---|
| 7A | Lightning Mixer | 30 | 2000 rpm (lowest shear of all equipment tested) | Droplet size > 50 microns, Emulsion very unstable (separation easily visible). |
| 7B | Waring Blender | 1.5 | Retail store bought | Droplet size < 3 microns. Stable emulsion. |
| 7C | Admix Rotosolver | 2 | Model suitable for use by industrial food processors. High rpm mixer with specially designed impeller | Droplet size < 20 microns. Stable emulsion. Preferred equipment and method. |
| 7D | Admix Rotosolver | 5 | Model suitable for use by industrial food processors. High rpm mixer with specially designed impeller | Droplet size < 20 microns. Stable emulsion. |
| 7E | Stephan Bowl Chopper | 1 | Model suitable for use by industrial food processors. Ultra high rpm w/ultra sharp blade assembly | Stable emulsion. Preferred equipment and method. |

As is apparent from the results set forth above in Table 7, Compositions 7B - 7E formed stable emulsions, whereas Composition 7A was unstable, likely because the lightning mixer did not generate sufficient shear to produce oil particles that are small enough to remain suspended in the composition. The Waring blender, Admix Rotosolver and Stephan Bowl Chopper all generate more shear than the lightning mixer, thus resulting in oil droplets having average sizes of less than about 40 microns, which is sufficiently small such that the emulsifiers effectively surround the oil droplets, keeping them in suspension within the water phase.

### EXAMPLE 8

This example illustrates the use of the coating composition with chicken tenders.

Thawed chicken tenders were dusted with Kerry G7102 Predust Breading, then battered with Kerry G7091 Batter, diluted in water (31.25% water:68.75% G7091). Then the chicken was breaded with Kerry G5890 Japanese Bread Crumbs. The chicken was then sprayed with the coating composition described in Example 1, emulsified in water at a ratio of 40% water to 60% coating composition, using a Fedco Cyclone Liquid Coater machine. The emulsion was prepared in a Stephan Bowl Chopper by placing the water into the bowl, then adding the coating composition and mixing at high speed for 1 minute.

The percentages by weight of each component in the final product are shown below in Table 8.

**TABLE 8**

| | |
|---|---|
| Skinless, boneless chicken tenders | 71% |
| Kerry G7102 Predust Breading | 4% |
| Kerry G7091 Batter | 9% |
| Kerry G5890 Japanese Bread Crumbs | 12% |
| Coating composition emulsified in water | 4% |

### EXAMPLE 9

This example illustrates the use of the coating composition with fish.

Commercially available formed Pollock wedges were first dusted with Kerry G6046 Adheso Batter diluted in water (63% water:37% G6046), followed by predusting with Kerry G3301 Predust Breading. A second coat of Kerry G6046 Adheso Batter diluted in water was then applied followed by a dusting of Kerry G5890 Japanese Bread Crumbs. The fish was then sprayed with the coating composition described in Example 1, emulsified in water in a ratio of 40% water to 60% coating composition. The emulsion was prepared in a Stephan Mixer and applied with a Fedco Cyclone Coater identically to the description in section 0031.

The percentages by weight of each component in the final product are shown below in Table 9.

**TABLE 9**

| | |
|---|---|
| Formed Pollock Wedges | 53.8% |
| Kerry G3301 Predust Breading | 8.0% |
| Kerry G6046 Adheso Batter | 19.0% |
| Kerry G5890 Japanese Bread Crumbs | 15.0% |
| Coating composition emulsified in water | 4.2% |

## Claims

1. An emulsion for coating a food product comprising:
(i) a composition comprising at least 85% by weight oil selected from soybean oil, corn oil, cottonseed oil, sunflower oil, canola oil, safflower oil, olive oil, peanut oil, and combinations thereof, a flavor, a color, an emulsifier having a total HLB of 4 to 6, and an antioxidant, wherein the composition is free of hydrophilic colloids; and
(ii) water; wherein
the composition is emulsified in the water in a ratio of 30-40% (by weight) composition to water; and wherein
the oil comprises droplets having an average size of 50 microns or less.

2. The coating composition of claim 1 wherein the flavor is selected from the group consisting of lemon, butter, buttermilk, cheese, dill, deep fat fried flavors, vegetable oil, partially hydrogenated vegetable oil, natural flavors, artificial flavors, oleoresins, essential oils, hydrolyzed soy protein, hydrolyzed corn protein, hydrolyzed wheat protein, hydrolyzed vegetable protein, and combinations thereof.

3. The coating composition of any one of claims 1-2, wherein the color is selected from the group consisting of lakes, beta carotene, paprika, turmeric, caramel, annatto, and combinations thereof.

4. The coating composition of any one of claims 1-3, wherein the emulsifier is selected from the group consisting of polysorbate 60, monoglycerides, diglycerides, polyglycerol esters of fatty acids, propylene glycol monoesters of fatty acids, lactylated monoglycerides, acetylated monoglycerides, polysorbate 80, and combinations thereof.

5. The coating composition of any one of claims 1-4, comprising at least 90% by weight oil.

6. The coating composition of any one of claims 1-5, wherein the composition has a viscosity of 30 to 400 mPa.s (30 to 400 centipoise) using a Brookfield LVF viscometer, spindle size 1 and 2, at 12 rpm, with a sample temperature of 15-21 °C.

7. The coating composition of any one of claims 1-6, wherein the antioxidant is selected from the group consisting of TBHQ, tocopherols, carotenoids, natural extracts, BHA, BHT, and combinations thereof.

8. A method for preparing a baked food product that simulates a food product that has been deep fried comprising:
(i) providing a coating composition comprising at least 85% by weight oil selected from soybean oil, corn oil, cottonseed oil, sunflower oil, canola oil, safflower oil, olive oil, peanut oil, and combinations thereof, a flavor, a color, an emulsifier having a total HLB of 4 to 6, and an antioxidant, wherein the composition is free of hydrophilic colloids,
(ii) emulsifying the coating composition in water in a ratio of 30-40% (by weight) composition to water wherein the oil comprises droplets having an average size of 50 microns or less,
(iii) contacting said food product with the coating composition, and
(iv) baking said food product.

9. The method of claim 8 wherein the coating composition is sprayed onto the food product.

10. The method of any one of claims 8-9 wherein the food product is coated in batter, breading, or a combination of such prior to contacting the coating composition.

11. The method of any one of claims 8-10 wherein the food product is selected from the group consisting of cheese, poultry, beef, pork, fish, seafood, vegetables, fruit, meat analogs, and combinations thereof.

## Patentansprüche

1. Emulsion für die Beschichtung eines Lebensmittelprodukts, die Folgendes umfasst:
(i) eine Zusammensetzung, die Folgendes umfasst: mindestens 85 Gewichts-% Öl, das aus Folgenden ausgewählt ist: Sojaöl, Maiskeimöl, Baumwollsamenöl, Sonnenblumenöl, Rapsöl, Distelöl, Olivenöl, Erdnussöl und Kombinationen davon, ein Aroma, eine Farbe, einen Emulgator, der eine Gesamt-HLB von 4 bis 6 aufweist, und ein Antioxidationsmittel, wobei die Zusammensetzung frei von hydrophilen Kolloiden ist; und
(ii) Wasser; wobei
die Zusammensetzung in dem Wasser in einem Verhältnis von 30-40 % (Gewichts-) der Zusammensetzung zu Wasser emulgiert ist; und wobei das Öl Tröpfchen umfasst, die eine durchschnittliche Größe von 50 Mikron oder weniger aufweisen.

2. Beschichtungszusammensetzung nach Anspruch 1, wobei das Aroma aus der Gruppe ausgewählt ist, die aus Folgenden besteht: Zitrone, Butter, Buttermilch, Käse, Dill, Öl-Frittier-Aroma, Pflanzenöl, teilweise hydriertem Pflanzenöl, natürlichen Aromen, künstlichen Aromen, Fettharzen, ätherischen Ölen, hydrolysiertem Sojaprotein, hydrolysiertem Maisprotein, hydrolysiertem Weizenprotein, hydrolysiertem Pflanzenprotein und Kombinationen davon.

3. Beschichtungszusammensetzung nach einem der Ansprüche 1-2, wobei die Farbe aus der Gruppe ausgewählt ist, die aus Folgenden besteht: Lacken, Betacarotin, Paprika, Kurkuma, Karamell, Annatto und Kombinationen davon.

4. Beschichtungszusammensetzung nach einem der Ansprüche 1-3, wobei der Emulgator aus der Gruppe ausgewählt ist, die aus Folgenden besteht: Polysorbat 60, Monoglyceriden, Diglyceriden, Polyglycerolestern von Fettsäuren, Propylenglycolmonoestern von Fettsäuren, lactylierten Monoglyceriden, acetylierten Monoglyceriden, Polysorbat 80 und Kombinationen davon.

5. Beschichtungszusammensetzung nach einem der Ansprüche 1-4, die mindestens 90 Gewichts-% Öl umfasst.

6. Beschichtungszusammensetzung nach einem der Ansprüche 1-5, wobei die Zusammensetzung eine Viskosität von 30 bis 400 mPa·s (30 bis 400 Centipoise) unter Verwendung eines Brookfield LVF Viskosimeters, Spindelgröße 1 und 2, bei 12 rpm mit einer Probentemperatur von 15-21 °C aufweist.

7. Beschichtungszusammensetzung nach einem der Ansprüche 1-6, wobei das Antioxidationsmittel aus der Gruppe ausgewählt ist, die aus Folgenden besteht: TBHQ, Tocopherolen, Carotinoiden, natürlichen Extrakten, BHA, BHT und Kombinationen davon.

8. Verfahren für die Herstellung eines gebackenen Lebensmittelprodukts, das ein Lebensmittelprodukt vortäuscht, das frittiert wurde, das Folgendes umfasst:
(i) Bereitstellen einer Beschichtungszusammensetzung, die Folgendes umfasst:
mindestens 85 Gewichts-% Öl, das aus Folgenden ausgewählt ist: Sojaöl, Maiskeimöl, Baumwollsamenöl, Sonnenblumenöl, Rapsöl, Distelöl, Olivenöl, Erdnussöl und Kombinationen davon, ein Aroma, eine Farbe, einen Emulgator, der eine Gesamt-HLB von 4 bis 6 aufweist, und ein Antioxidationsmittel, wobei die Zusammensetzung frei von hydrophilen Kolloiden ist,
(ii) Emulgieren der Beschichtungszusammensetzung in Wasser in einem Verhältnis von 30-40 % (Gewichts-) der Zusammensetzung zu Wasser, wobei das Öl Tröpfchen umfasst, die eine durchschnittliche Größe von 50 Mikron oder weniger aufweisen,
(iii) Inkontaktbringen des Lebensmittelprodukts mit der Beschichtungszusammensetzung und
(iv) Backen des Lebensmittelprodukts.

9. Verfahren nach Anspruch 8, wobei die Beschichtungszusammensetzung auf das Lebensmittelprodukt gesprüht wird.

10. Verfahren nach einem der Ansprüche 8-9, wobei das Lebensmittelprodukt in Backteig, Paniermehl oder einer Kombination von derartigem vor dem Inkontaktbringen der Beschichtungszusammensetzung beschichtet wird.

11. Verfahren nach einem der Ansprüche 8-10, wobei das Lebensmittelprodukt aus der Gruppe ausgewählt ist, die aus Folgenden besteht: Käse, Geflügelfleisch, Rindfleisch, Schweinefleisch, Fisch, Meeresfrüchten, Gemüse, Obst, Fleischanaloga und Kombinationen davon.

## Revendications

1. Emulsion destinée à enrober un produit alimentaire, comprenant :
(i) une composition comprenant au moins 85% en poids d'une huile choisie parmi l'huile de soja, l'huile de maïs, l'huile de coton, l'huile de tournesol, l'huile de colza, l'huile de carthame, l'huile d'olive, l'huile d'arachide, et des combinaisons de celles-ci, un arôme, un colorant, un émulsifiant ayant un rapport hydro-lipophile total allant de 4 à 6, et un antioxydant, où la composition est dépourvue de colloïdes hydrophiles ; et
(ii) de l'eau ; où
la composition est émulsifiée dans l'eau selon un rapport de 30-40% (en poids) de la composition à l'eau ; et où
l'huile comprend des gouttelettes ayant une taille moyenne de 50 microns ou moins.

2. Composition de revêtement selon la revendication 1, dans laquelle l'arôme est choisi dans le groupe constitué par le citron, le beurre, le babeurre, le fromage, l'aneth, les arômes de friture, l'huile végétale, l'huile végétale partiellement hydrogénée, les arômes naturels, les arômes artificiels, les oléorésines, les huiles essentielles, les protéines de soja hydrolysées, les protéines de maïs hydrolysées, les protéines de blé hydrolysées, les protéines végétales hydrolysées, et des combinaisons de ceux-ci.

3. Composition de revêtement selon l'une quelconque des revendications 1-2, dans laquelle le colorant est choisi dans le groupe constitué par les laques, le bêta-carotène, le paprika, le curcuma, le caramel, l'annatto, et des combinaisons de ceux-ci.

4. Composition de revêtement selon l'une quelconque des revendications 1-3, dans laquelle l'émulsifiant est choisi dans le groupe constitué par le polysorbate 60, les monoglycérides, les diglycérides, les esters de polyglycérol et d'acides gras, les monoesters de propylène glycol et d'acides gras, les monoglycérides lactylés, les monoglycérides acétylés, le polysorbate 80, et des combinaisons de ceux-ci.

5. Composition de revêtement selon l'une quelconque des revendications 1-4, comprenant au moins 90% en poids d'huile.

6. Composition de revêtement selon l'une quelconque des revendications 1-5, où la composition possède une viscosité allant de 30 à 400 mPa.s (30 à 400 centipoises) en utilisant un viscosimètre Brookfield LVF, taille de tige de 1 et 2, à 12 tours/min, avec une température d'échantillon de 15-21°C.

7. Composition de revêtement selon l'une quelconque des revendications 1-6, dans laquelle l'antioxydant est choisi dans le groupe constitué par la TBHQ, les tocophérols, les caroténoïdes, les extraits naturels, le BHA, le BHT, et des combinaisons de ceux-ci.

8. Méthode de préparation d'un produit alimentaire cuit qui simule un produit alimentaire ayant été frit, comprenant :
(i) la fourniture d'une composition de revêtement comprenant au moins 85% en poids d'une huile choisie parmi l'huile de soja, l'huile de maïs, l'huile de coton, l'huile de tournesol, l'huile de colza, l'huile de carthame, l'huile d'olive, l'huile d'arachide, et des combinaisons de celles-ci, un arôme, un colorant, un émulsifiant ayant un rapport hydro-lipophile total allant de 4 à 6, et un antioxydant, où la composition est dépourvue de colloïdes hydrophiles ; et
(ii) l'émulsification de la composition de revêtement dans de l'eau selon un rapport de 30-40% (en poids) de la composition à l'eau, où l'huile comprend des gouttelettes ayant une taille moyenne de 50 microns ou moins,
(iii) la mise en contact dudit produit alimentaire avec la composition de revêtement, et
(iv) la cuisson dudit produit alimentaire.

9. Méthode selon la revendication 8, dans laquelle la composition de revêtement est pulvérisée sur le produit alimentaire.

10. Méthode selon l'une quelconque des revendications 8-9, dans laquelle le produit alimentaire est revêtu de pâte à frire, de chapelure, ou d'une combinaison de celles-ci préalablement à la mise en contact avec la composition de revêtement.

11. Méthode selon l'une quelconque des revendications 8-10, dans laquelle le produit alimentaire est choisi dans le groupe constitué par le fromage, la volaille, le boeuf, le porc, le poisson, les fruits de mer, les légumes, les fruits, les analogues de viande, et des combinaisons de ceux-ci.
